(19) Europäisches Patentamt / European Patent Office / Office européen des brevets

(11) **EP 2 369 529 A1**

(12) **EUROPEAN PATENT APPLICATION**

(43) Date of publication:
**28.09.2011 Bulletin 2011/39**

(51) Int Cl.:
**G06N 7/00** *(2006.01)*  **G06F 21/00** *(2006.01)*

(21) Application number: **10305292.4**

(22) Date of filing: **24.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Alcatel Lucent**
**75008 Paris (FR)**

(72) Inventors:
• **Wahl, Stefan**
**71701 Schwieberdingen (DE)**

• **Guethle, Martin**
**73061 Ebersbach a.d.Fils (DE)**
• **Koegel, Jochen**
**71409 Schwaikheim (DE)**
• **Kaschub, Matthias**
**72813 St. Johann (DE)**
• **Mueller, Christian**
**70806 Kornwestheim (DE)**

(74) Representative: **Kleinbub, Oliver et al**
**Alcatel Lucent**
**Intellectual Property & Standards**
**Lorenzstrasse 10**
**70435 Stuttgart (DE)**

(54) **A method of detecting anomalies in a message exchange, corresponding computer program product, and data storage device therefor**

(57) The invention concerns a method of detecting anomalies in a message exchange by means of a binary classifier, the method comprising the steps of receiving (101) a plurality of training messages, each training message tagged as either normal or anomalous, and, based on the training messages, building the binary classifier for a test message, wherein the training messages and the test message conform to a text-based protocol and wherein, in order to build the binary classifier, the method comprises the steps of transforming (102) each training message into a multi-dimensional vector of features spanning a feature space, each feature corresponding to a contiguous substring of the respective training message, constructing (103) a hyperplane in the feature space, and building (104) the binary classifier based on the hyperplane. The invention further concerns a computer program product and a device therefor.

<u>100</u>

101 Receive training messages

102 Transform training messages

103 Construct hyperplane

104 Build binary classifier

105 Apply classifier to test message

Fig. 1

## Description

### Field of the Invention

The invention relates to a method of detecting anomalies in a message exchange according to claim 1, a computer program product according to claim 9, and a data storage device according to claim 10.

### Background

In the art of data security, anomaly detection is the detection of patterns in a given data set that do not conform to an established normal behavior. The patterns thus detected are called anomalies and often translate to critical and actionable information in the given application domain. Anomalies are also referred to as outliers, surprises, aberrant, deviations, or peculiarities. Anomaly detection is applicable in a variety of domains, such as intrusion detection, fraud detection, fault detection, system health monitoring, event detection in sensor networks, and the detection of eco-system disturbances.

Anomaly detection was proposed for intrusion detection systems (IDS) by Dorothy Denning in "An Intrusion Detection Model", IEEE Transactions on Software Engineering, Volume SE-13, Issue No. 2, February 1987, pages 222 to 232. Anomaly detection for IDS, sometimes called misuse detection in this context, is commonly accomplished using thresholds and statistics, but can also be achieved by means of soft computing and inductive learning. Victoria J. Hodge and Jim Austin provide an overview of such advanced approaches in "A Survey of Outlier Detection Methodologies", Artificial Intelligence Review, Volume 22, Issue No. 2, October 2004, pages 85 to 126.

A major downside of these known methodologies lies in the inherent nonlinearity of the systems involved, highly complicating their application to the task of anomaly detection.

### Summary

It is an object of the invention to present an improved approach that allows detecting anomalies in a message exchange with moderate overhead.

This object is achieved by a method according to claim 1, a computer program product according to claim 9, or a data storage device according to claim 10.

A main idea of the invention is to map the original, non-linear observations on a message into a higher-dimensional space, allowing the use of a linear binary classifier. This linear classification in the higher-dimensional space thus avoids the need for non-linear classification in the original space.

Further developments of the invention can be gathered from the dependent claims and the following description.

In the following the invention will be explained further making reference to the attached drawing.

To detect, according to an embodiment of the invention, an anomaly in a message exchange, first a plurality of training messages is received, each training message conforming to a text-based protocol and being tagged as either normal or anomalous. Upon receipt of these messages, each is transformed into a multi-dimensional vector of features, each of which features in turn corresponds to a contiguous substring of the training message at hand. In the feature space spanned by these vectors, a hyperplane is then constructed, based upon which a binary classifier is finally built. This binary classifier may serve to determine whether a given test message is to be considered normal or anomalous.

### Brief Description of the Figures

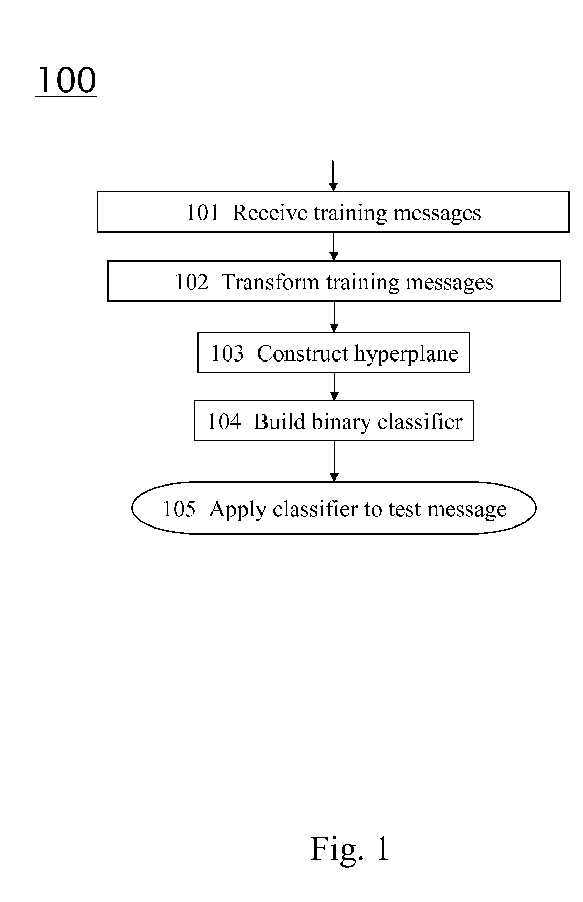

Fig. 1 shows a flowchart depicting a method according to an embodiment of the invention.

### Description of the Embodiments

In the following, a method according to the invention is elucidated by way of example, referencing Fig. 1.

The flowchart 100 of Fig. 1 comprises a first processing step 101, a second processing step 102, a third processing step 103, a fourth processing step 104, each represented by a rectangle. The flowchart 100 further comprises a terminator 105, represented by a rounded rectangle. A flow of control passing through the processing steps 101 to 104 and the terminal 105 is represented by a set of arrows. An arrow starting at a first symbol and ending at a second symbol indicates that control passes from the first symbol to the second symbol.

In the embodiment at hand, the method is applied by a piece of software executed on a computer. Herein, by computer is meant any machine that manipulates data according to a set of instructions.

In the first processing step 101, the software receives a plurality of training messages, each training message tagged as either normal or anomalous. To allow for the control of multimedia communication sessions such as voice and video calls over Internet Protocol (IP), the training messages conform to the Session Initiation Protocol (SIP), a signaling protocol used for creating, modifying and terminating two-party (unicast) or multiparty (multicast) sessions consisting of one or several media streams. In accordance with SIP specifications, each training message consists of a start line, one or more header fields, an empty line indicating the end of the header fields, and an optional message body. In an augmented Backus-Naur Form (BNF) grammar, this structure may be expressed as follows:

```
generic-message  =  start-line

                    *message-header

                    CRLF

                    [ message-body ]
```

For purposes of session announcement, session invitation, or other forms of multimedia session initiation, the body of a training message may contain a description of the multimedia session to be established, encoded according to the Session Description Protocol (SDP).

In alternative embodiments, the method may be adapted for messages expressed by means of Extensible Markup Language (XML), a set of rules defined by the World Wide Web Consortium (W3C) for encoding documents electronically. Specifically, an XML-based embodiment may be applied to messages exchanged with RESTful web services that support the "application/xml" Internet media type, formerly known as Multipurpose Internet Mail Extensions (MIME) type. By web service is meant an application programming interface (API) that can be accessed over a network, such as the Internet, and executed on a remote system hosting the requested service. In this context, by RESTful is meant a web service that conforms to the constraints imposed by the style of software architecture commonly known as Representational State Transfer (REST).

To optimize the training curve achieved by applying the method, the training messages comprise a balanced assortment of normal and anomalous messages, each subset labeled accordingly.

In the second processing step 102, the software transforms each training message received in the first step 101 into a multi-dimensional feature vector, each feature in turn corresponding to a contiguous substring of the respective training message. To allow for a uniform feature structure, all substrings are of the same length $n$. Within the fields of natural language processing and computational linguistics, such substring is known as an $n$-gram. As an example, the software may transform a training message starting with "INVITE sip:bob@exampleINVITE.com SIP/2.0" into the following feature vector:

$$\begin{pmatrix} INVI \\ NVIT \\ \vdots \\ /2.0 \end{pmatrix} = \begin{pmatrix} 1 \\ 2 \\ \vdots \\ 1 \end{pmatrix}$$

To account for words and identifiers of particular significance within the SIP context, further features are based on keywords contained within header fields, the session description, or other parts of the message body. For example, a header field may contain the SIP keyword "CSeq" (Command Sequence) to indicate a sequence number that is incremented for each new request within a dialog, as in the example "CSeq: 314159 INVITE". In contrast to features corresponding to n-grams, features corresponding to keywords may refer to variable-length substrings of the respective training message. Certain keywords are always followed by a constant part, which is not the keyword itself. In such cases the constant part is added to the keyword feature. An example is the keyword "branch", where the value must start with "z9hG4bK" and thus the keyword will always be used as "branch=z9hG4bK????" with ???? denoting the variable part. Compared to using feature vectors based purely on $n$-grams, the introduction of additional features based on keywords bears the two-fold benefit of decreasing both the false-positive and false-negatives rates that the decision process exhibits. In statistics, a false positive is commonly referred to as a type I error, $\alpha$ error, or false alarm rate (FAR), whereas a false negative is known as a type II error error, or miss rate.

To extract such keywords, method type and, at the same time, check the syntax of a message at hand, the software comprises a message parser. In accordance with its meaning within the art of computing, by parser is meant a component of the software for performing a syntactic analysis of the message to determine its grammatical structure with respect to the formal grammar imposed by the SIP and SDP specifications. To alleviate the associated programming effort, the parser is generated semiautomatically from SIP and SDP grammars expressed in BNF. Upon execution, the parser uses a lexical analyzer to create tokens from the sequence of input characters that constitute the SIP message and builds a data structure such as a parse tree, abstract syntax tree, or other hierarchical structure implicit in these tokens.

In the third processing step 103, the software constructs a hyperplane in the feature space that is spanned by the feature vectors obtained by the transformation of the second processing step 102. To this end, the software employs a scalable vector machine (SVM), that is, a supervised learning method used for classification. For maximum separation of these two groups with the feature space, the software chooses the hyperplane that has the largest distance to the nearest feature vectors of any of the two classes constituted by the normal or anomalous training messages, respectively. In statistical classification, this distance is commonly called the functional margin. Consequently, the selected hyperplane is known as the maximum-margin hyperplane.

To facilitate analysis of the feature space, the software makes use of the Waikato Environment for Knowledge Analysis (Weka), a popular suite of machine learning software developed by the University of Waikato and presented by G. Holmes, A. Donkin, and I.H. Witten in "Weka: A machine learning workbench", Proceedings of the Second Australia and New Zealand Conference on Intelligent Information Systems, Brisbane, Australia.

In the forth processing step 104, based on the hyperplane constructed in the third processing step 103, the software builds a binary classifier for a test message. In mathematics, a classifier is a sort of function that provides a tagged class - here, either the normal or the anomalous class - as an output from a set of attributes taken as an input - here, the feature vector associated with the test message. According to its meaning within statistical classification, the classifier is called binary as it classifies the members of a given set of objects - here, the set of SIP messages - into two groups depending on whether they are to be considered normal or anomalous. The hyperplane and associated feature space thus effectively constitute a model for predicting whether the test message falls into either of these two groups. By having maximized the functional margin throughout the third processing step 103, the SVM serves to minimize the generalization error of the resulting binary classifier, therefore optimizing the performance of the machine learning algorithm underlying the method at hand. The resulting binary classifier is known in the art as the maximum-margin classifier.

To account for the message syntax imposed by SIP, the binary classifier is further based on a weighted sum of individual scores assigned to the start line, each of the header fields, and the message body. In accordance with the term's use in mathematics, by weighted sum is meant any sum in which some scores are given more "weight" or influence on the result than other scores.

To reflect the semantics of the message exchange at hand, the binary classifier is further based on the SIP message type of request or response, which is determined according to the following BNF from a message's start line:

```
start-line       =  Request-Line / Status-Line
```

Here, a SIP request is distinguished by having a request line for a start line, whereas a SIP response possesses a status line as its start line. To mirror the SIP message type within the model based upon which the classifier is built, the SVM employed in the third processing step 103 comprises adequate subclasses for each message type, the response subclass being further subdivided by individual subclasses for each of the different response codes defined by SIP. For example, an end system contacted by a caller via SIP may return a response code of 600 if the callee is busy and does not wish to take the call at this time, and a response code of 200 if the call has been answered. In the latter case, the start line of the callee's SIP response may take the form "SIP/2.0 200 OK". In addition to determining the applicable SVM subclass for the test message, the message type defines which keywords are valid for the message at hand.

To take into account the type of multimedia communication session to be established, the binary classifier is further based on a possible SDP-conformant session description contained in the SIP message body, as outlined in the context of the first processing step 101.

Finally, to reflect the output of the parser employed in the second processing step 102, the binary classifier is based on the presence and possible severity of any syntax error encountered in the test message. To account for minor syntactical errors, the software allows configuring the strictness applied by the parser. To this end, an administrator may choose to ignore such minor errors and make use of an adapted parse tree when checking messages for SIP conformance.

Upon reaching the terminal 105, the software applies the binary classifier to a given SIP-conformant test message to determine whether that test message is to be considered normal or anomalous. In particular, the detection of an anomaly may indicate an exploit contained in the test message, that is, a part of the message that takes advantage of a bug, glitch, or vulnerability to cause unintended or unanticipated behavior by the receiver. This behavior may allow the sender to gain control of the receiving computer system, obtain privilege escalation, or perform a denial-of-service attack. An example of such exploitation is code injection, that is, the inclusion of invalid data into a message to introduce malicious code into the receiving computer program, thus changing its course of execution. In the case where the underlying vulnerability occurs in the database layer of the receiving application, this technique is commonly referred to as SQL injection in the art of computer security.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawing merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method of detecting anomalies in a message exchange, the method comprising the steps of
   receiving (101) a plurality of training messages, each training message tagged as either normal or anomalous, and,
   based on the training messages, building a binary classifier for a test message to determine whether the test message is normal or anomalous,
   wherein the training messages and the test message conform to a text-based protocol,
   **characterized in that**, in order to build the binary classifier, the method comprises the steps of
   transforming (102) each training message into a multi-dimensional vector of features, each feature corresponding to a contiguous substring of the respective training message, the vectors spanning a feature space,
   constructing (103) a hyperplane in the feature space,
   and
   building (104) the binary classifier based on the hyperplane.

2. A method according to claim 1, **characterized in that** the method comprises the subsequent step of applying (105) the binary classifier to the test message.

3. A method according to claim 2, **characterized in that** the test message conforms to the Session Initiation Protocol and comprises a start line, at least one header field, and a message body and the method comprises the further step of assigning a score to the start line, each of the header fields, and the message body,
   wherein the binary classifier is further based on a weighted sum of the scores.

4. A method according to claim 3, **characterized in that** the method comprises the further step of
   determining a message type based on the start line,
   wherein the binary classifier is further based on the message type.

5. A method according to claim 3 or claim 4, **characterized in that** the message body contains a session description and the method comprises the further step of

extracting the session description from the message body,
wherein the binary classifier is further based on the session description.

6. A method according to claim 5, **characterized in that** the method comprises the further step of extracting a keyword from at least one of the following:

> the session description and
> the message body,

wherein at least one of the features is based on the keyword.

7. A method according to claim 6, **characterized in that** the session description conforms to the Session Description Protocol and, in order to extract the keyword, the method comprises the step of
parsing the session description.

8. A method according to any of the preceding claims, **characterized in that** the method comprises the further step of checking the syntax of the test message based on a context-free grammar,
wherein, in response to detecting a syntax error, the binary classifier is further based on the severity of the syntax error.

9. A computer program product comprising computer-executable instructions for performing a method when the program is run on a computer, the method comprising the steps of
receiving (101) a plurality of training messages, each training message tagged as either normal or anomalous, and, based on the training messages, building a binary classifier for a test message to determine whether the test message is normal anomalous,
wherein the training messages and the test message conform to a text-based protocol,
**characterized in that**, in order to build the binary classifier, the method comprises the steps of
transforming (102) each training message into a multi-dimensional vector of features, each feature corresponding to a contiguous substring of the respective training message, the vectors spanning a feature space,
constructing (103) a hyperplane in the feature space,
and
building (104) the binary classifier based on the hyperplane.

10. A device programmed or configured to perform a method comprising the steps of
receiving (101) a plurality of training messages, each training message tagged as either normal or anomalous, and, based on the training messages, building a binary classifier for a test message to determine whether the test message is normal or anomalous,
wherein the training messages and the test message conform to a text-based protocol,
**characterized in that**, in order to build the binary classifier, the method comprises the steps of
transforming (102) each training message into a multi-dimensional vector of features, each feature corresponding to a contiguous substring of the respective training message, the vectors spanning a feature space,
constructing (103) a hyperplane in the feature space,
and
building (104) the binary classifier based on the hyperplane.

## 100

```
101  Receive training messages

102  Transform training messages

103  Construct hyperplane

104  Build binary classifier

105  Apply classifier to test message
```

# Fig. 1

Europäisches
Patentamt

European
Patent Office

Office européen
des brevets

**EUROPEAN SEARCH REPORT**

Application Number

EP 10 30 5292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KONRAD RIECK ET AL: "A Self-learning System for Detection of Anomalous SIP Messages" 1 July 2008 (2008-07-01), PRINCIPLES, SYSTEMS AND APPLICATIONS OF IP TELECOMMUNICATIONS. SERVICES AND SECURITY FOR NEXT GENERATION NETWORKS; [LECTURE NOTES IN COMPUTER SCIENCE], SPRINGER BERLIN HEIDELBERG, BERLIN, HEIDELBERG, PAGE(S) 90 - 106 , XP019109765 ISBN: 978-3-540-89053-9 * the whole document * | 1-10 | INV. G06N7/00 ADD. G06F21/00 |
| X | "Self-Learning SIP Anomaly Detection Algorithm and Architecture (SIP Firewall) - Protecting SIP Networks From Attack"[Online] December 2008 (2008-12), XP002589096 Alcatel-Lucent Innovation Days December 2008 Retrieved from the Internet: URL:http://innovationdays.alcatel-lucent.c om/2008/documents/SIP%20Firewall.pdf> [retrieved on 2010-06-28] * the whole document * | 1-10 | |
| | | | TECHNICAL FIELDS SEARCHED (IPC) G06N G06F |
| X | MOHAMED NASSAR ET AL: "Monitoring SIP Traffic Using Support Vector Machines" 15 September 2008 (2008-09-15), RECENT ADVANCES IN INTRUSION DETECTION; [LECTURE NOTES IN COMPUTER SCIENCE], SPRINGER BERLIN HEIDELBERG, BERLIN, HEIDELBERG, PAGE(S) 311 - 330 , XP019105447 ISBN: 978-3-540-87402-7 * page 311 - page 327 * | 1-10 | |

-/--

The present search report has been drawn up for all claims

| Place of search | Date of completion of the search | Examiner |
|---|---|---|
| The Hague | 29 June 2010 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 10 30 5292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JingTao Yao, Songlun Zhao, and Lisa Fan: "An Enhanced Support Vector Machine Modelfor Intrusion Detection"[Online] vol. LNAI 4062, 27 September 2006 (2006-09-27), pages 538-543, XP002589097 Lecture Notes in Computer Science, Springer-Verlag RSKT Retrieved from the Internet: URL:http://www.springerlink.com/content/545p551497h0p3u2/fulltext.pdf> [retrieved on 2010-07-05] * abstract * in particular also Section 3 * page 539 - page 543 * ----- | 1-10 | |
| X | US 2007/177607 A1 (NICCOLINI SAVERIO [DE] ET AL) 2 August 2007 (2007-08-02) * abstract; claims 1-25; figures 1-6 * * paragraph [0002] - paragraph [0059] * ----- | 1-10 | |
| X | EP 2 112 803 A1 (ALCATEL LUCENT [FR]) 28 October 2009 (2009-10-28) * abstract; claims 1-9; figures 1-12 * * paragraph [0001] - paragraph [0045] * ----- | 1-10 | TECHNICAL FIELDS SEARCHED (IPC) |
| A | EP 2 134 057 A1 (ALCATEL LUCENT [FR]) 16 December 2009 (2009-12-16) * abstract; claims 1-14; figures 1,2 * * paragraph [0001] - paragraph [0038] * ----- | 1,8-10 | |

The present search report has been drawn up for all claims

| Place of search | Date of completion of the search | Examiner |
|---|---|---|
| The Hague | 29 June 2010 | Volkmer, Markus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 10 30 5292

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2010

| Patent document cited in search report | | Publication date | Patent family member(s) | | Publication date |
|---|---|---|---|---|---|
| US 2007177607 | A1 | 02-08-2007 | CN<br>DE<br>JP | 101009706 A<br>102006004202 A1<br>2007200323 A | 01-08-2007<br>09-08-2007<br>09-08-2007 |
| EP 2112803 | A1 | 28-10-2009 | CN<br>WO<br>US | 101582905 A<br>2009130203 A1<br>2009265778 A1 | 18-11-2009<br>29-10-2009<br>22-10-2009 |
| EP 2134057 | A1 | 16-12-2009 | CN<br>WO<br>US | 101605072 A<br>2009150049 A1<br>2009313698 A1 | 16-12-2009<br>17-12-2009<br>17-12-2009 |

EPO FORM P0459

For more details about this annex : see Official Journal of the European Patent Office, No. 12/82

**REFERENCES CITED IN THE DESCRIPTION**

**Non-patent literature cited in the description**

- **DOROTHY DENNING.** An Intrusion Detection Model. *IEEE Transactions on Software Engineering,* February 1987, vol. SE-13 (2), 222-232
- **VICTORIA J. HODGE ; JIM AUSTIN.** A Survey of Outlier Detection Methodologies. *Artificial Intelligence Review,* October 2004, vol. 22 (2), 85-126

- **G. HOLMES ; A. DONKIN ; I.H. WITTEN.** Weka: A machine learning workbench. *Proceedings of the Second Australia and New Zealand Conference on Intelligent Information Systems*